# EUROPEAN PATENT APPLICATION

(11) **EP 4 755 608 A1**
(43) Date of publication of application: **10.06.2026**
(21) Application number: 24888408.2
(22) Date of filing: 19.09.2024
(51) Int. Cl.: B29C 48/25, B29C 44/00, B29C 44/56, B29C 48/07, B29C 48/88

(54) **APPARATUS FOR MANUFACTURING MICROPOROUS POLYOLEFIN RESIN SHEET AND METHOD FOR MANUFACTURING MICROPOROUS POLYOLEFIN RESIN SHEET**

(30) Priority: 06.11.2023 JP 2023189057
(71) Applicant: Toray Industries, Inc., Tokyo 103-8666 (JP)
(72) Inventor: YOSHIKAWA, Toshiki, Otsu-shi, Shiga 520-8558 (JP); INOMOTO, Takeshi, Otsu-shi, Shiga 520-8558 (JP); MUROI, Tomohiro, Nasushiobara-shi, Tochigi 329-2763 (JP)
(74) Representative: Hoefer & Partner Patentanwälte mbB
(86) International application number: PCT/JP2024/033394
(87) International publication number: WO 2025/100108

(57) **Abstract**

A microporous polyolefin resin sheet manufacturing apparatus of the present invention includes a die including a discharge opening configured to discharge a sheet material containing a polyolefin resin and a diluent; a casting device configured to cool and solidify the sheet material discharged from the discharge opening while conveying the sheet material; a pressure-reducing chamber that is disposed on an upstream side of the discharge opening in the sheet conveying direction, the chamber being configured to cover a space between the sheet material and the casting device, and form a reduced-pressure space by air being sucked, wherein, in the pressure-reducing chamber, in a cross-sectional view as seen from a sheet width direction, an inner wall surface of the pressure-reducing chamber is inclined in a manner such that the inner wall surface is directed downward in a vertical direction from a first end close to the discharge opening toward a second end, and the second end is located at a position spaced apart from the casting device, a suction port for sucking air from the interior to the exterior of the pressure-reducing chamber is provided between the second end of the pressure-reducing chamber and the casting device, and the second end is an upper edge of the suction port in the vertical direction.

## Description

### Field

The present invention relates to a microporous polyolefin resin sheet manufacturing apparatus and a microporous polyolefin resin sheet manufacturing method. Background

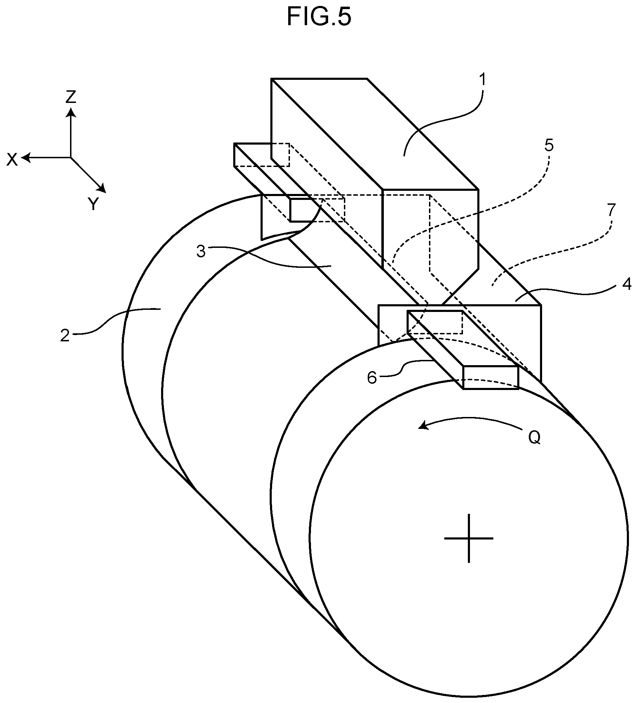

First, a general apparatus for manufacturing a microporous polyolefin resin sheet is described. FIG. 5 is a perspective view of a general apparatus for manufacturing a microporous polyolefin resin sheet. As illustrated in FIG. 5, the general manufacturing apparatus includes a die 1 having a discharge opening 5 that discharges a sheet material 3 containing a polyolefin resin and a diluent, a casting device 2 that cools and solidifies the sheet material 3 discharged from the discharge opening 5 while conveying the sheet material 3, and a pressure-reducing chamber 4 that is disposed on the upstream side of the discharge opening 5 in a sheet conveying direction Q, covers a space 7 (hereinafter, reduced-pressure space) between the sheet material 3 and the casting device 2, and reduces the pressure in the reduced-pressure space 7 by air being sucked through intake and exhaust nozzles 6. The sheet material 3 discharged from the discharge opening 5 of the die 1 toward the casting device 2 is brought into close contact with the casting device 2 by reducing the pressure in the reduced-pressure space 7, and cooled and solidified while being conveyed by the casting device 2. Here, there is no constraint on the installation position of the intake and exhaust nozzles 6, and the installation position is not limited to both ends in the sheet width direction Y of the pressure-reducing chamber 4 as illustrated in FIG. 5.

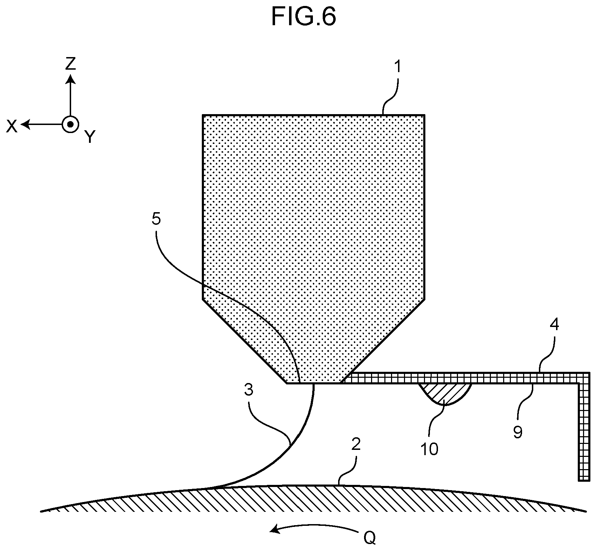

Here, since the sheet discharged from the die is at a high temperature, gases derived from a low-molecular-weight component, a diluent, and an additive inside the sheet are generated and adheres to a wall surface in the pressure-reducing chamber to be condensed and liquefied. FIG. 6 is a cross-sectional view perpendicular to the sheet width direction Y of the general apparatus for manufacturing a microporous polyolefin resin sheet. As illustrated in FIG. 6, a condensate 10 formed by condensation and liquefaction of the gases adhering to an inner wall surface 9 of the pressure-reducing chamber 4 gradually grows, and if the condensate 10 falls into the casting device 2 due to its own weight or an airflow in the reduced-pressure space, liquid defects such as sheet appearance defects and sheet breakage occur.

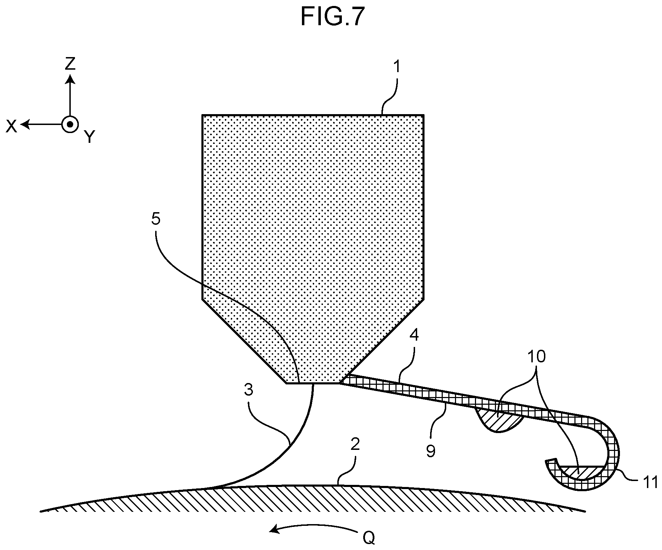

As a technique for suppressing liquid defects, there is a resin sheet manufacturing apparatus disclosed in Patent Literature 1. Patent Literature 1 discloses a resin sheet manufacturing apparatus provided with an inclined inner wall surface and a liquid receiver for the purpose of capturing the condensate before the condensate falls. FIG. 7 is a cross-sectional view perpendicular to the sheet width direction Y of the resin sheet manufacturing apparatus described in Patent Literature 1. As illustrated in FIG. 7, the condensate 10 adhering to the inner wall surface 9 flows along the inclined surface before growing, and is captured by a liquid receiver 11 and discharged, so that it is possible to suppress the condensate from falling into the casting device 2 in the manufacturing apparatus of Patent Literature 1.

### Citation List

### Patent Literature

Patent Literature 1: WO 2016/125526 A

### Summary

### Technical Problem

However, in the resin sheet manufacturing apparatus of Patent Literature 1, a certain amount of the condensate is accumulated in the liquid receiver, and therefore the condensate is scattered by the airflow in the reduced-pressure space and falls into the casting device, so that the liquid defects cannot be completely eliminated, and a method for suppressing the liquid defects has not been proposed.

Therefore, the present invention provides microporous polyolefin resin sheet manufacturing apparatus and method capable of stably manufacturing a high-quality sheet by suppressing falling of the condensate into a casting device without providing a liquid receiver.

### Solution to Problem

[1] The present invention to resolve the problem is a microporous polyolefin resin sheet manufacturing apparatus including: a die including a discharge opening configured to discharge a sheet material containing a polyolefin resin and a diluent; a casting device configured to cool and solidify the sheet material discharged from the discharge opening while conveying the sheet material; and a pressure-reducing chamber that is disposed on an upstream side of the discharge opening in a sheet conveying direction, the chamber being configured to cover a space between the sheet material and the casting device, and form a reduced-pressure space by air being sucked. In the pressure-reducing chamber, in a cross-sectional view as seen from a sheet width direction, an inner wall surface of the pressure-reducing chamber is inclined in a manner such that the inner wall surface is directed downward in a vertical direction from a first end close to the discharge opening toward a second end, and the second end is located at a position spaced apart from the casting device, a suction port for sucking air from an interior to an exterior of the pressure-reducing chamber is provided between the second end of the pressure-reducing chamber and the casting device, and the second end is an upper edge of the suction port in the vertical direction.
   The microporous polyolefin resin sheet manufacturing apparatus according to the present invention is preferably in any one of the following embodiments [2] to [4].
[2] The microporous polyolefin resin sheet manufacturing apparatus according to [1], wherein, in the cross-sectional view as seen from the sheet width direction, a distance A [mm] in a horizontal direction from the second end to a lower edge of the suction port in a vertical direction and a gap B [mm] of the suction port satisfy A/B ≤ 5.
[3] The microporous polyolefin resin sheet manufacturing apparatus according to [1] or [2], wherein, in the cross-sectional view as seen from the sheet width direction, the inner wall surface is bent near the second end, and an acute angle is formed by the inner wall surface and a horizontal direction, and the angle on the second end side from the portion that is bent is larger than the angle on the first end side from the portion that is bent by 30 degrees or more.
[4] The microporous polyolefin resin sheet manufacturing apparatus according to any one of [1] to [3], wherein the suction port has a length in the sheet width direction being greater than or equal to a length of the inner wall surface in the sheet width direction.
[5] The present invention to resolve the problem is a microporous polyolefin resin sheet manufacturing method using the microporous polyolefin resin sheet manufacturing apparatus according to claims 1 to 4, the method including: discharging a sheet material containing a polyolefin resin and a diluent from the discharge opening toward the casting device; sucking air in the pressure-reducing chamber to form a reduced-pressure space; and bringing the sheet material into close contact with the casting device. The method includes: while sucking a condensate adhering to the inner wall surface of the pressure-reducing chamber and reaching the second end along the inner wall surface, from the suction port to an exterior of the pressure-reducing chamber, and cooling and solidifying the sheet material while conveying by the casting device.

### [Explanation of terms]

The meaning of terms in the present invention is described.

The "sheet material" is a material constituting a sheet. As the sheet material, for example, a resin of a polyolefin solution prepared by mixing a polyolefin resin, such as polyethylene, polypropylene, polystyrene, or polymethylpentene, with a diluent and heating and melting the mixture can be used. The diluent is not particularly limited as long as the diluent is a substance that can be mixed or dissolved in the polyolefin resin. A material that is miscible with the polyolefin in a melt-kneaded state but is solid at room temperature may be used as the diluent. Examples of such a solid diluent include stearyl alcohol, ceryl alcohol, and paraffin wax. The diluent is preferably a liquid at room temperature in order to prevent unevenness and the like in stretching and in consideration of application later. Examples of the liquid diluent include aliphatic, cycloaliphatic and aromatic hydrocarbons such as nonane, decane, decalin, paraxylene, undecane, dodecane and liquid paraffin; mineral oil fractions having boiling points corresponding thereto; and phthalic acid esters that are liquid at room temperature, such as dibutyl phthalate and dioctyl phthalate. Liquid paraffin is more preferably used in order to obtain a stable gel-like sheet. In addition, the viscosity of the liquid diluent is preferably 20 to 200 cSt at 40°C. The blend ratio of the polyolefin resin and the diluent is preferably 10 to 50 mass% of the polyolefin resin and 50 to 90 mass% of the diluent, based on 100 mass% of the total of the polyolefin resin and the diluent, from the viewpoint of improving moldability of an extruded product. A step for uniform melt-kneading of the sheet material is not particularly limited, and examples thereof include a calender, various mixers, and an extruder with a screw.

The "die" refers to a device that discharges the sheet material and molds the sheet material into a sheet shape.

The "discharge opening" refers to a part of the die from which the sheet material is discharged.

The "casting device" refers to a device that conveys the sheet material discharged from the discharge opening to the downstream while cooling and solidifying the sheet material by bringing the sheet material into close contact with the casting device. The form is not particularly limited, and examples thereof include a roll and a belt.

The "sheet width direction" refers to a direction coinciding with the width direction when the sheet material is molded into a sheet shape by the die, and is a direction of a reference sign Y in the drawings.

The "sheet conveying direction" refers to a direction in which the casting device conveys the sheet immediately below the die, and is a direction of a reference sign Q in the drawings. The conveyance destination is the downstream side, and the opposite is the upstream side.

The "reduced-pressure space" refers to a space that is formed between the sheet material and the casting device, covered with the pressure-reducing chamber, and set to a negative pressure.

The "pressure-reducing chamber" refers to a device that covers the space between the sheet material and the casting device and brings the sheet material into close contact with the casting device by reducing the pressure. In general, the pressure in the pressure-reducing chamber is -1500 Pa or more and -50 Pa or less relative to the atmospheric pressure. In addition, the pressure in the pressure-reducing chamber may be controlled depending on film formation conditions.

The "inner wall surface" refers to a wall surface of the pressure-reducing chamber on the reduced-pressure space side in a cross-sectional view as seen from the sheet width direction.

The "first end" refers to an end of the inner wall surface close to the discharge opening in a cross-sectional view as seen from the sheet width direction.

The "second end" refers to an end of the inner wall surface far from the discharge opening in a cross-sectional view as seen from the sheet width direction.

The "near the second end" refers to a range within 10 mm from the second end.

The "suction port" refers to an opening that is located between the second end and the casting device and is for sucking air from the interior to the exterior of the pressure-reducing chamber. The shape is not particularly limited, but examples thereof include a square shape, a rectangular shape, a trapezoidal shape, a circular shape, and an elliptical shape, and a plurality of the suction ports may be disposed in the sheet width direction. The wall surface may be provided with a surface treatment such as nickel plating, chromium plating, or zinc plating. The power source of the suction is not particularly limited, and examples thereof include a blower and a vacuum pump. Advantageous Effects of Invention

According to the polyolefin resin sheet manufacturing apparatus and the method of the present invention, it is possible to stably manufacture a high-quality sheet by suppressing the condensate adhering to the inner wall surface of the pressure-reducing chamber from falling into the casting device.

### Brief Description of Drawings

FIG. 1 is a cross-sectional view perpendicular to the sheet width direction of one aspect of the microporous polyolefin resin sheet manufacturing apparatus of the present invention.
FIG. 2 is a partially enlarged view of the vicinity of the suction port in FIG. 1.
FIG. 3 is a cross-sectional view perpendicular to the sheet width direction in the vicinity of the suction port of the microporous polyolefin resin sheet manufacturing apparatus of the present invention, and is a view of an aspect with A/B = 5 of the manufacturing apparatus.
FIG. 4 is a cross-sectional view perpendicular to the sheet width direction of the microporous polyolefin resin sheet manufacturing apparatus of the present invention, and is a view of the manufacturing apparatus of an aspect in which the inner wall surface is bent near the second end such that the angle formed with the horizontal direction increases by 45 degrees.
FIG. 5 is a perspective view of a general apparatus for manufacturing a microporous polyolefin resin sheet.
FIG. 6 is a cross-sectional view perpendicular to the sheet width direction of a general apparatus for manufacturing a microporous polyolefin resin sheet.
FIG. 7 is a cross-sectional view perpendicular to the sheet width direction of a resin sheet manufacturing apparatus described in Patent Literature 1.

### Description of Embodiments

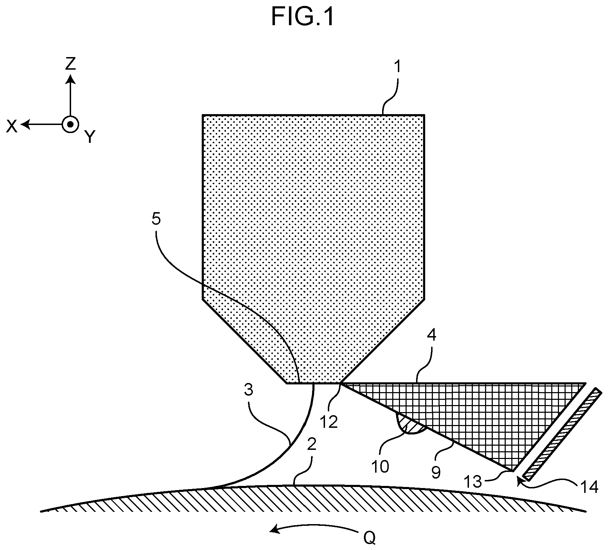

Although the present invention is described in detail below, the present invention is not limited to the embodiments including the following examples. FIGS. 1 to 4 are views relating to a microporous polyolefin resin sheet manufacturing apparatus of the present invention. Note that members having the same uses and functions as those of the conventional technique may have the same reference numerals.

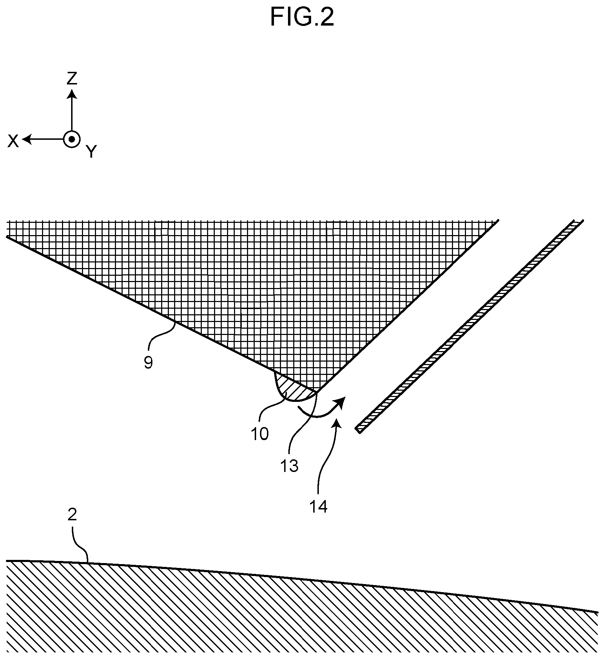

A microporous polyolefin resin sheet manufacturing apparatus of the present invention is described. FIG. 1 is a cross-sectional view perpendicular to a sheet width direction Y of one aspect of the microporous polyolefin resin sheet manufacturing apparatus of the present invention. FIG. 2 is a partially enlarged view of the vicinity of the suction port in FIG. 1. The manufacturing apparatus includes a die 1 having a discharge opening 5 that discharges a sheet material 3 containing a polyolefin resin and a diluent, a casting device 2 that cools and solidifies the sheet material 3 discharged from the discharge opening 5 while conveying the sheet material 3, and a pressure-reducing chamber 4 that is disposed on the upstream side of the discharge opening 5 in a sheet conveying direction Q, covers the space (reduced-pressure space) between the sheet material 3 and the casting device 2, and reduces the pressure in the reduced-pressure space by air being sucked. In the manufacturing apparatus, the sheet material 3 discharged from the discharge opening 5 of the die 1 toward the casting device 2 is brought into close contact with the casting device 2 by reducing the pressure in the reduced-pressure space, and cooled and solidified while being conveyed by the casting device 2.

As illustrated in FIG. 1, in the microporous polyolefin resin sheet manufacturing apparatus of the present invention, in the cross-sectional view as seen from the sheet width direction Y, an inner wall surface 9 of the pressure-reducing chamber 4 is inclined in a manner such that the inner wall surface 9 is directed downward (casting device 2 side) in the vertical direction (Z direction) from a first end 12 which is an end close to the discharge opening 5 toward a second end 13 which is an end far from the discharge opening 5, and the second end 13 is at a position spaced apart from the casting device 2. Between the second end 13 of the pressure-reducing chamber 4 and the casting device 2, a suction port 14 for sucking air from the interior to the exterior of the pressure-reducing chamber 4 is formed, and the second end 13 is an upper edge of the suction port 14 in the vertical direction. Since the inner wall surface 9 is inclined in a manner such that the inner wall surface 9 is directed downward in the vertical direction from the first end 12 toward the second end 13, a condensate 10 adhering to the inner wall surface 9 flows along the inclined surface and reaches the second end 13. Then, as illustrated in FIG. 2, the condensate 10 that has reached the second end 13 is sucked through the suction port 14 before growing and falling by its own weight or an airflow, and is discharged to the exterior of the pressure-reducing chamber 4, so that liquid defects can be suppressed without the condensate 10 falling into the casting device 2.

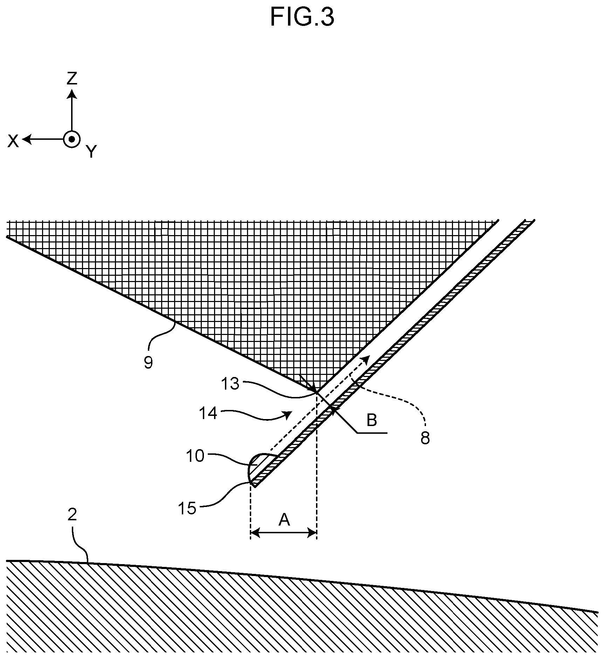

In a microporous polyolefin resin sheet manufacturing apparatus of the present invention, in the cross-sectional view as seen from the sheet width direction (Y direction), a distance A [mm] (hereinafter, defined as a landing distance A) in the horizontal direction (X direction) from a second end 13 to a lower edge of a suction port in the vertical direction (Z direction) and a gap B [mm] of the suction port preferably satisfy A/B ≤ 5. Here, the value of the distance A is defined as taking a positive value when the lower edge of the suction port in the vertical direction is on the downstream side of the second end in the sheet conveying direction, and taking a negative value when the lower edge is on the upstream side in the sheet conveying direction. FIG. 3 is a cross-sectional view perpendicular to a sheet width direction in the vicinity of the suction port of the microporous polyolefin resin sheet manufacturing apparatus of the present invention, and is a view of an aspect with A/B = 5 of the manufacturing apparatus. As illustrated in FIG. 3, in the case of A/B ≤ 5, an airflow 8 generated by suction through the suction port 14 also flows to the vicinity of the lower edge 15 in the vertical direction, and thereby a condensate 10 can be sucked even if the condensate 10 adheres to the vicinity of the edge 15, so that liquid defects can be suppressed. More preferably, A/B ≤ 3. In addition, the lower limit value of A/B is preferably -1 (A/B ≥ -1). The dimension B is determined according to film formation conditions, but B is preferably 0.5 mm or more, and more preferably 1 mm or more, because if the suction port is small, suction becomes unstable due to clogging with liquid droplets or the like.

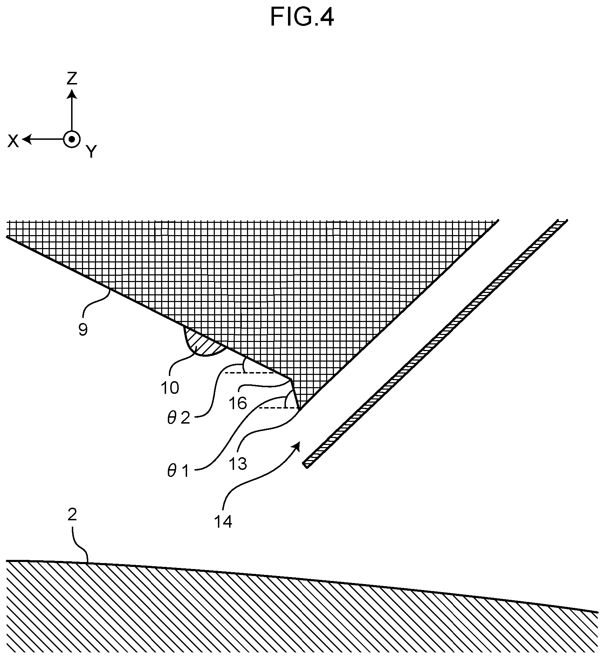

In a microporous polyolefin resin sheet manufacturing apparatus of the present invention, it is preferable that, in the cross-sectional view as seen from a sheet width direction (Y direction), an inner wall surface 9 is bent near a second end 13, an acute angle is formed by the inner wall surface 9 and the horizontal direction, and the angle θ1 on the second end 13 side from the portion 16 that is bent (hereinafter, bent portion 16) is larger than the angle θ2 on a first end 12 side by 30 degrees or more. FIG. 4 is a cross-sectional view perpendicular to the sheet width direction Y of the microporous polyolefin resin sheet manufacturing apparatus of the present invention, and is a view of the manufacturing apparatus of an aspect in which the inner wall surface is bent such that the angle formed with the horizontal direction increases by 45 degrees near the second end 13. As illustrated in FIG. 4, since the inner wall surface 9 is bent near the second end 13, a condensate 10 flowing down toward the second end 13 along the inner wall surface 9 is in a state of being prevented from proceeding by the inner wall surface 9 at the bent portion 16, and the flow down speed of the condensate 10 is once reduced. Since the condensate 10 slows down at the bent portion 16 and then reaches the second end 13, the condensate is easily sucked into the suction port 14. It is more preferable that the inner wall surface is bent so as to increase the angle with the horizontal direction by 45 degrees or more near the second end. Note that, in the form of FIG. 4, the second end 13 is on the upstream side from the bent portion 16 in the sheet conveying direction, but the inner wall surface 9 may be bent such that the second end 13 is on the downstream side from the bent portion 16 in the sheet conveying direction.

In a microporous polyolefin resin sheet manufacturing apparatus of the present invention, the length of the suction port in the sheet width direction (Y direction) is preferably greater than or equal to the length of the inner wall surface in the sheet width direction Y. Since the suction range of the suction port is equal to or greater than the inner wall surface, the condensate flowing on the inner wall surface can be reliably sucked. The "length of the suction port in the sheet width direction" as used herein refers to the length of individual suction ports in the sheet width direction (Y direction) in an aspect in which a plurality of suction ports are arranged in the sheet width direction (Y direction).

In a microporous polyolefin resin sheet manufacturing method of the present invention, a sheet material is cooled and solidified while being conveyed by the casting device, while the condensate adhering to the inner wall surface of the pressure-reducing chamber and reaching the second end along the inner wall surface is sucked from the suction port to the exterior of the pressure-reducing chamber. The flow of the condensate is described with reference to FIG. 1. The condensate 10 adhering to the inner wall surface 9 of the pressure-reducing chamber reaches the second end 13 along the inclined surface. The condensate 10 that has reached the second end 13 is sucked from the suction port 14 to the exterior of the pressure-reducing chamber and removed, so that liquid defects can be suppressed.

In the microporous polyolefin resin sheet manufacturing apparatus according to the present embodiment described above, in the cross-sectional view as seen from the sheet width direction, the inner wall surface 9 of the pressure-reducing chamber 4 is inclined in a manner such that the inner wall surface is directed downward in the vertical direction from the first end 12 close to the discharge opening 5 toward the second end 13, the second end 13 is separated from the casting device 2, the suction port 14 for sucking air from the interior to the exterior of the pressure-reducing chamber 4 is provided between the second end of the pressure-reducing chamber 4 and the casting device 2, and the second end 13 is an upper edge of the suction port 14 in the vertical direction. According to the present embodiment, a high-quality sheet can be stably manufactured by providing the above-described configuration, which suppresses falling of the condensate into the casting device without providing a liquid receiver.

### Examples

Examples of manufacturing a polyolefin resin sheet using the polyolefin resin sheet manufacturing apparatus in the present invention are described below.

### [Example 1]

Results of actually manufacturing polyolefin resin sheets using the polyolefin resin sheet manufacturing apparatus and evaluating the liquid defects are described. Specific sheet manufacturing conditions and methods for evaluating liquid defects in the present embodiment are as follows.

### (1) Sheet material

High density polyethylene (HDPE): viscosity of 1000 Pa · s. Here, the viscosity was measured by the method of JIS K7117-2 under the conditions of a shear rate of 100/s and a temperature of 200°C.

Liquid paraffin (LP): kinematic viscosity of 50 cSt (at 40°C).

The mixing ratio of HDPE to LP is HDPE : LP = 30 : 70 by mass.

### (2) Extrusion

The sheet material having a flow rate of 250 kg/h was extruded using an extruder, and supplied to a die via a gear pump and a filter. In addition, the temperature of the device up to the die is 220°C.

### (3) Die

The sheet material was discharged from a discharge opening having a width of 500 mm to form a sheet. The amount of volatilized LP from the discharged sheet was measured to be about 100 g/h.

### (4) Casting device

The sheet was brought into close contact with a sheet forming roll at a temperature of 35°C, and cooled and solidified.

### (5) Pressure-reducing chamber

The pressure-reducing chamber is installed on the upstream side of the discharge opening of the die in the sheet conveying direction (Q direction), and has a shape that covers the space between the sheet material discharged from the discharge opening and the casting device. In the cross-sectional view as seen from the sheet width direction (Y direction), the inner wall surface of the pressure-reducing chamber is inclined at a constant angle of 30 degrees (= θ2) from the horizontal direction in a manner such that the inner wall surface is directed downward in the vertical direction (Z direction) from the first end close to the discharge opening toward the second end, the second end is located at a position separated from the casting device by 3 mm, the suction port is provided between the second end of the pressure-reducing chamber and the casting device, and the second end is an upper edge of the suction port in the vertical direction. The dimension of the inner wall surface in the sheet width direction is 500 mm. Five suction ports, each having a landing distance A of 6 mm, a gap B of 1 mm (A/B = 6), and a dimension in the sheet width direction of 50 mm, are disposed in the sheet width direction. In addition, the pressure-reducing chamber has exhaust nozzles disposed on both end wall surfaces so as to face each other. In this state, the interior of the pressure-reducing chamber was sucked at - 600 Pa relative to the atmospheric pressure by a blower connected to the exhaust nozzles and the suction port.

### (6) Defect detection device

The number of liquid defects of a sheet (length of 100 m) taken under the above conditions was counted using a MaxEye.Impact (manufactured by FUTEC INC. ) as an inspection apparatus.

### [Example 2]

A sheet was taken in the same manner as in Example 1, except that the landing distance A of the suction port was changed to 5 mm (A/B = 5).

### [Example 3]

A sheet was taken in the same manner as in Example 1, except that the landing distance A of the suction port was changed to 3 mm (A/B = 3).

### [Example 4]

A sheet was taken in the same manner as in Example 1, except that the landing distance A of the suction port was changed to 0 mm (A/B = 0).

### [Example 5]

A sheet was taken in the same manner as in Example 1, except that the landing distance A of the suction port was changed to -0.5 mm (A/B = -0.5).

### [Example 6]

A sheet was taken in the same manner as in Example 1, except that the gap B of the suction port was changed to 2 mm (A/B = 3).

### [Example 7]

A sheet was taken in the same manner as in Example 1, except that in the cross-sectional view as seen from the sheet width direction Y, the inner wall surface of the pressure-reducing chamber was bent such that the angle (θ1) formed with the horizontal direction at a position of 5 mm from the second end 13 was 75 degrees, which is larger than θ2 by 45 degrees, on the downstream side of the second end 13 in the sheet conveying direction (see FIG. 4).

### [Example 8]

A sheet was taken in the same manner as in Example 1, except that one suction port having a dimension of 500 mm in the sheet width direction was disposed.

### [Comparative Example 1]

A sheet was taken in the same manner as in Example 1, except that in the cross-sectional view as seen from the sheet width direction, the inner wall surface of the pressure-reducing chamber was horizontal and the suction port was not provided.

### [Comparative Example 2]

A sheet was taken in the same manner as in Example 1, except for employing a configuration illustrated in FIG. 7 in which a liquid receiver continuous with the inner wall surface of the pressure-reducing chamber was provided and the suction port was not provided.

### [Evaluation Results]

The effect of each example was evaluated based on the extent to which the liquid defects were reduced relative to Comparative Examples 1 and 2.

In Comparative Example 1, the number of liquid defects was 66. In Comparative Example 2 in which the inner wall surface of the pressure-reducing chamber was inclined and the liquid receiver was provided, the number of liquid defects was 34, indicating that the number of liquid defects was reduced as compared with that in Comparative Example 1.

On the other hand, in Example 1 in which the inner wall surface of the pressure-reducing chamber was inclined and the suction port was provided in the vicinity of the second end, the number of liquid defects was seven, indicating that the number of liquid defects was reduced as compared with that in Comparative Example 2.

In Example 2, Example 3, Example 4, Example 5, and Example 6, which satisfy the condition of A/B ≤ 5, the number of liquid defects was 4, 1, 0, 1, and 0, respectively, indicating that the number of liquid defects of all these Examples was reduced even when compared with that in Example 1.

In Example 7 in which a bent portion is provided in the vicinity of the second end, the number of liquid defects was four, indicating that the number of liquid defects was reduced even when compared with that in Example 1.

In Example 8 in which one suction port having a dimension of 500 mm in the sheet width direction Y was disposed, the number of liquid defects was three, indicating that the number of liquid defects was reduced even when compared with that in Example 1.

### Industrial Applicability

The present invention is not limited to the microporous polyolefin resin sheet manufacturing apparatus and method, and can also be applied to an apparatus and a method for manufacturing a solution resin sheet, die coating, and the like, but the application range is not limited thereto.

### Reference Signs List

- 1: DIE
- 2: CASTING DEVICE
- 3: SHEET MATERIAL
- 4: PRESSURE-REDUCING CHAMBER
- 5: DISCHARGE OPENING
- 6: EXHAUST NOZZLE
- 7: REDUCED-PRESSURE SPACE
- 8: AIRFLOW
- 9: INNER WALL SURFACE
- 10: CONDENSATE
- 11: LIQUID RECEIVER
- 12: FIRST END
- 13: SECOND END
- 14: SUCTION PORT
- 15: LOWER EDGE OF SUCTION PORT IN VERTICAL DIRECTION
- 16: BENT PORTION
- A: LANDING DISTANCE
- B: GAP OF SUCTION PORT
- Q: SHEET CONVEYING DIRECTION
- X: HORIZONTAL DIRECTION
- Y: SHEET WIDTH DIRECTION
- Z: VERTICAL DIRECTION

## Claims

1. A microporous polyolefin resin sheet manufacturing apparatus comprising:
a die including a discharge opening configured to discharge a sheet material containing a polyolefin resin and a diluent;
a casting device configured to cool and solidify the sheet material discharged from the discharge opening while conveying the sheet material; and
a pressure-reducing chamber that is disposed on an upstream side of the discharge opening in a sheet conveying direction, the chamber being configured to cover a space between the sheet material and the casting device, and form a reduced-pressure space by air being sucked,
wherein, in the pressure-reducing chamber, in a cross-sectional view as seen from a sheet width direction, an inner wall surface of the pressure-reducing chamber is inclined in a manner such that the inner wall surface is directed downward in a vertical direction from a first end close to the discharge opening toward a second end, and the second end is located at a position spaced apart from the casting device,
a suction port for sucking air from an interior to an exterior of the pressure-reducing chamber is provided between the second end of the pressure-reducing chamber and the casting device, and
the second end is an upper edge of the suction port in the vertical direction.

2. The microporous polyolefin resin sheet manufacturing apparatus according to claim 1, wherein, in the cross-sectional view as seen from the sheet width direction, a distance A [mm] in a horizontal direction from the second end to a lower edge of the suction port in a vertical direction and a gap B [mm] of the suction port satisfy A/B ≤ 5.

3. The microporous polyolefin resin sheet manufacturing apparatus according to claim 1, wherein, in the cross-sectional view as seen from the sheet width direction, the inner wall surface is bent near the second end, and an acute angle is formed by the inner wall surface and a horizontal direction, and the angle on the second end side from the portion that is bent is larger than the angle on the first end side from the portion that is bent by 30 degrees or more.

4. The microporous polyolefin resin sheet manufacturing apparatus according to claim 1, wherein the suction port has a length in the sheet width direction being greater than or equal to a length of the inner wall surface in the sheet width direction.

5. A microporous polyolefin resin sheet manufacturing method using the microporous polyolefin resin sheet manufacturing apparatus according to claims 1 to 4, the method comprising:
discharging a sheet material containing a polyolefin resin and a diluent from the discharge opening toward the casting device;
sucking air in the pressure-reducing chamber to form a reduced-pressure space, and bringing the sheet material into close contact with the casting device; and
while sucking a condensate adhering to the inner wall surface of the pressure-reducing chamber and reaching the second end along the inner wall surface, from the suction port to an exterior of the pressure-reducing chamber,
cooling and solidifying the sheet material while conveying by the casting device.
